# EUROPÄISCHE PATENTANMELDUNG

(11) **EP 1 970 819 A1**
(43) Veröffentlichungstag der Anmeldung: **17.09.2008**
(21) Anmeldenummer: 07022474.6
(22) Anmeldetag: 20.11.2007
(51) Int. Cl.: G06F 17/30, H04N 5/00

(54) **Verfahren zum Erstellen und Ausgeben von Webseiten über ein Computernetzwerk**

(71) Anmelder: Eye-T Communications GmbH, 30175 Hannover (DE)
(72) Erfinder: Zielke, Steven, A., Dipl.-Ing., 30163 Hannover (DE)
(74) Vertreter: Bremer, Ulrich

(57) **Zusammenfassung**

Die Erfindung betrifft ein Verfahren zum Erstellen und Ausgeben von Webseiten (S4) über ein Computernetzwerk (9), insbesondere ein Internet (9), mit mindestens folgenden Schritten:
Erfassen eines sich bewegendes Objekts (5) mit einer Videokamera (2) vor einem Hintergrundschirm (4) und Ausgabe eines ersten Videosignals (S1), das in zeitlich aufeinander folgenden Frames jeweils mehrere Bildpunkte aufweist,
Verändern von Transparenzwerten derjenigen Bildpunkte der Frames, die dem Hintergrundschirm (4) zugeordnet sind, und Ausgabe als zweites Videosignal (S2),
Speichern des zweiten Videosignals (S2) als Videodatei (S2) in einer ersten Speichereinrichtung (11), und
Anbieten mindestens einer Webseite (S4) zum Abruf von einem Webserver (10) in dem Computernetzwerk (9),
wobei bei Abruf der Webseite (S4) von dem Webserver (10) durch einen Computer (12) über das Computernetzwerk (9) die gespeicherte Videodatei (S2) als Videosignal der abgerufenen Webseite (S4) überlagert wird.

## Beschreibung

Die Erfindung betrifft ein Verfahren zum Erstellen und Ausgeben von Webseiten über ein Computernetzwerk, insbesondere ein Internet, sowie die hierdurch erstellte Webseite.

### Stand der Technik

In Computernetzwerken, insbesondere dem Internet, sind verschiedene Rechner bzw. Computer mit vorgegebenen Protokollen vernetzt. Ein Benutzer kann im world wide web von Webservern bzw. Hosts Webseiten als Dateien mit vorgegebenem Format, z.B. HTML-Dokumente oder XML- Dokumente, abrufen, indem ein Browser-Programm seines Rechners die betreffende Netzwerkadresse des Webservers aufruft.

Die abgerufenen Webseiten werden von dem Browser-Programm auf dem abrufenden Computer in der Regel als zweidimensionale graphische Oberfläche, d.h. in einem Fenster abgebildet. Statische Webseiten werden durch einfache auf dem Webserver gespeicherte Dateien dargestellt. Weiterhin sind dynamische Webseiten bekannt, bei denen bei der Anforderung ein Programm gestartet wird, das Daten aufnimmt und als Datei an den Browser überträgt, wobei z. B. veränderliche Darstellungen oder Video-Filme gezeigt werden können.

Durch dynamische Webseiten können komplexere Zusammenhänge dargestellt werden. Hierbei ist auch z. B. der Aufruf eines Schulungsprogramms oder eine Erläuterung der dargestellten Webseite möglich.

Es zeigt sich jedoch, dass herkömmliche Webseiten, bei denen sich bewegende Symbole, Bildelemente und künstliche Figuren, sogenannte Avatare, Zusammenhänge erklären, von den Benutzern zum Teil als zu schwer verständlich aufgenommen werden.

### Aufgabe der Erfindung

Der Erfindung liegt die Aufgabe zugrunde, ein Verfahren zum Erstellen und Ausgeben von Webseiten zu schaffen, das eine neuartige dynamische Gestaltung ermöglicht und nachträglich mit geringem Aufwand zu aktualisieren ist. Weiterhin soll eine entsprechende Webseite geschaffen werden.

### Offenbarung der Erfindung

Diese Aufgabe wird durch ein Verfahren nach Anspruch 1 gelöst. Die Unteransprüche beschreiben bevorzugte Weiterbildungen. Ergänzend werden weiterhin die hierdurch geschaffene Webseite und eine Anordnung zur Durchführung des erfindungsgemäßen Verfahrens geschaffen.

Weiterhin betrifft die Erfindung ein Verfahren zum Überlagern von Videodateien auf Webseiten.

Der Erfindung liegt der Gedanke zugrunde, eine dynamisch Webseite zu schaffen, bei der eine zuvor aufgenommene Videodatei eines bewegten Objektes als Videosignal eingeblendet wird. Hierzu wird vorab ein sich bewegendes Objekt von einer Videokamera vor einem neutralen Hintergrund aufgenommen, insbesondere einem einfarbigen Hintergrund, was auch als Chromakey-Verfahren oder je nach verwendeter Hintergrundfarbe als Bluescreen-, Bluebox- oder Greenscreen-Technologie bekannt ist. Das sich bewegende Objekt kann insbesondere eine menschliche Person sein, die durch entsprechende Gestiken und Bewegungen sowie auch durch Sprache die später dazustellende Webseite erklärt. Hierbei kann diese Person insbesondere durch Gestiken wie Handbewegungen, Kopfbewegungen und Blicke verschiedene Stellen präsentieren, die relevante Inhalte auf der Webseite wiedergeben. Erfindungsgemäß wird als Bewegung somit z. B. auch eine Mimik oder Sprechbewegung angesehen.

Das Videosignal wird nachfolgend in an sich bekannter Weise verarbeitet, indem die dem Hintergrund entsprechenden Bildpixel transparent dargestellt werden, d.h. mit einem Transparentwert bzw. Apha-Wert von Null. Die so erzeugte Videodatei wird nachfolgend abgespeichert. Sie kann insbesondere in einem zusätzlichen Programm-Server abgespeichert werden, der von dem die Webseite anbietenden Webserver verschieden ist.

Wenn ein Internet-Teilnehmer über das Browser-Programm seines Computers die Internetadresse des Webservers mit der gespeicherten Webseite anruft, wird das Programm gestartet. Er kann hierzu insbesondere wiederum über das Internet den Programmserver aufrufen und die dort aktuell gespeicherte Videodatei abrufen. Indem die Videodatei von der Webseite getrennt auf einem separaten Programmserver gespeichert wird, ist eine einfache separate Aktualisierung der Videodatei unabhängig von der Webseite möglich. Hierbei können die Videodatei und das auf der Webseite auszuführende Programm von einem externen Dienstleister auf dessen Programm-server angeboten, gespeichert und gepflegt werden, so dass der Inhaber des Webservers von derartig komplexen Funktionen befreit wird.

Das auf dem Programmserver aufgerufene Programm überlagert nachfolgend die gespeicherte Videodatei auf die Webseite. Somit wird erfindungsgemäß das zuvor mit der Videokamera aufgenommene Objekt direkt auf der Webseite dargestellt. Da in den einzelnen Frames die das sich bewegende Objekt umgebenden Bildpunkte transparent sind, scheint sich dieses Objekt somit für den Benutzer erkennbar direkt auf der Webseite zu bewegen.

Somit kann erfindungsgemäß bereits ein lebhafter, den Benutzer ansprechender Eindruck erweckt werden. Es kann gegenüber der bekannten Darstellung von sich bewegenden Motiven und Bildelementen, einschließlich der Darstellung von Avataren und anderen künstlichen Gestalten, ein psychologisch und pädagogisch deutlich ansprechender Auftritt erreicht werden. Dem liegt die erfindungsgemäße Erkenntnis zugrunde, dass sich Benutzer des Internets von künstlichen Artefakten nur sehr gering motivieren lassen. Es zeigt sich vielmehr, dass eine Erläuterung durch eine menschliche Person, z.B. einen Lehrer in einem Schulungskurs, die Betrachter besser anspricht und zudem dem Webanbieter einen persönlicheren Auftritt ermöglicht.

Erfindungsgemäß kann das aufgerufene Programm auf der Webseite auch interaktiv tätig werden, d.h. Interaktionen mit der Webseite durchführen. Es kann insbesondere auf der Webseite angebotene Links betätigen und weitere Funktionen starten, z.B. durch Aktivieren angebotener Schaltflächen. Erfindungsgemäß kann hierbei der Bewegungsverlauf des sich bewegenden Objektes, d.h. insbesondere der menschlichen Person, mit diesen Interaktionen abgestimmt sein, so dass dem Betrachter der dynamischen Webseite der Eindruck vermittelt wird, dass die sich bewegende Person die betreffenden Funktionen startet und diese Funktionen hierbei erläutert.

Weiterhin kann das Programm auch zwischen verschiedenen Webseiten springen. Somit wird das überlagerte Videosignal zunächst auf einer ersten Webseite und nachfolgend - vorzugsweise unter entsprechenden Erläuterung durch das sich bewegende Objekt - auf einer weiteren, z.B. anschließend gestarteten Webseite dargestellt.

Somit sind insbesondere auch Erläuterungen und Einführungen zu einem Internetauftritt mit unterschiedlichen Funktionen und mehreren Webseiten möglich.

Grundsätzlich können die Videodatei sowie das Programm zur Überlagerung der Videodatei auf der Webseite auch in dem Webserver selbst gespeichert werden.

Kurze Beschreibung der Zeichnungen
- Fig. 1: zeigt ein Blockdiagramm einer erfindungsgemäßen Anordnung;
- Fig. 2: zeigt die erfindungsgemäße Darstellung der Internetseiten einer Anzeigeeinrichtung;

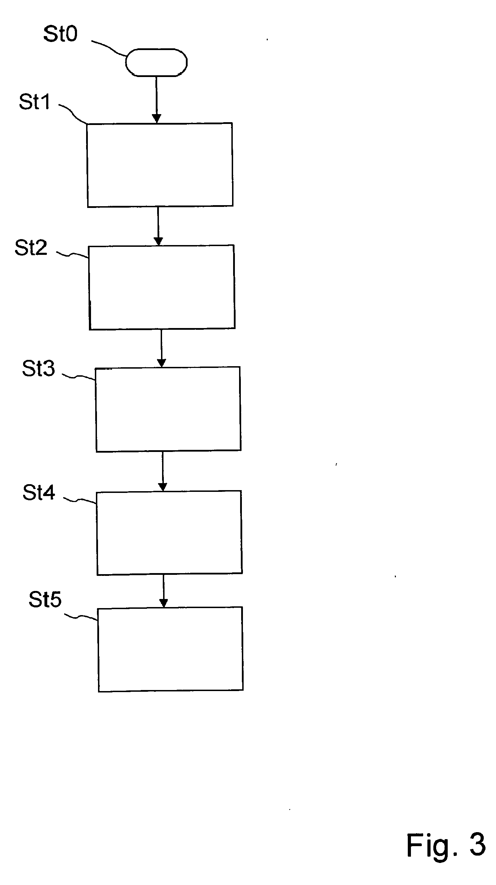

- Fig. 3: zeigt ein Flussdiagramm eines erfindungsgemäßen Verfahrens.

### Bevorzugte Ausführungsform

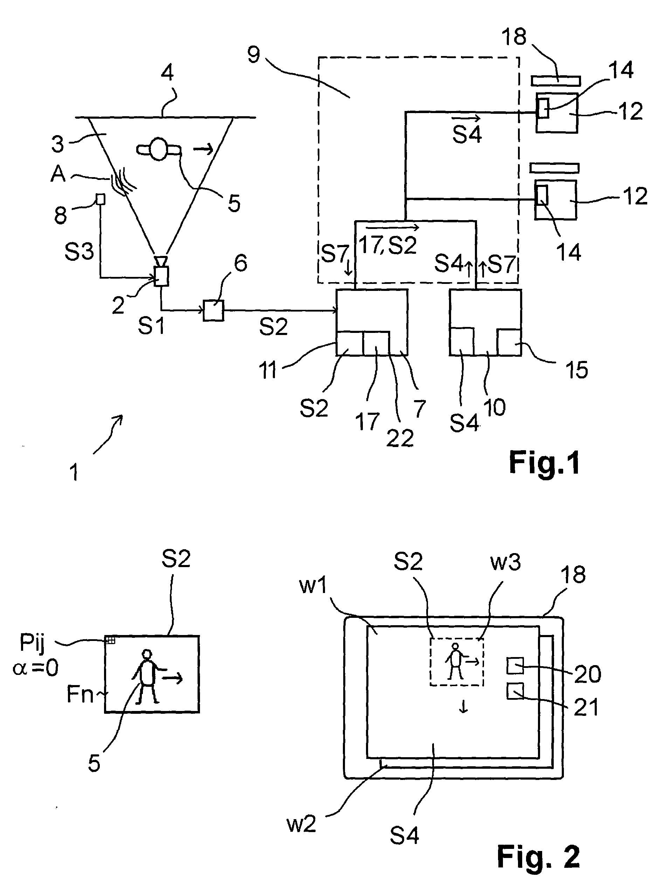

In der in Fig. 1 gezeigten Anordnung 1 ist eine Videokamera 2 vorgesehen, in deren Erfassungsbereich 3 ein Hintergrundschirm (Screen) 4 und vor dem Hintergrundschirm 4 ein sich bewegendes Objekt 5 angeordnet sind. Der Hintergrundschirm 4 weist eine einheitliche Farbe, z. B. Blau bei einem Bluescreen-Verfahren, auf.

Die Videokamera 2 gibt ein erstes Signal S1 mit Frame-Signalen Fn an eine Bearbeitungseinrichtung 6 aus. Die Frame-Signale Fn weisen hierbei in bekannter Weise Pixel Pij auf. In der Bearbeitungseinrichtung 6 werden den Pixeln Pij unterschiedliche Transparenzwerte α zugeordnet, wobei denjenigen Pixeln Pij, auf denen der Schirm 4 abgebildet wird, der Transparenzwert α = 0, d.h. vollständige Transparenz zugeordnet wird. Ein derartiges Verfahren ist bei Bildkompositionen durch Überlagerung bzw. Alphablending als solches bereits bekannt. Diejenigen Pixel Pij, die das Objekt 5 wiedergeben, werden ohne Transparenz dargestellt.

Die Bearbeitungseinrichtung 6 gibt Bildsignale S2 an einen Programm-server 7 aus, der eine Speichereinrichtung 11 für das Videosignal S2 aufweist. Hierbei kann die Bearbeitungseinrichtung 6 als separate Recheneinrichtung oder auch rein softwaremäßig ausgebildet sein, z. B. auch direkt im Programmserver 7.

Das Objekt 5 ist vorteilhafterweise eine menschliche Person, die im Erfassungsbereich 3 Bewegungen durchführt und ergänzend Audiosignale A ausgibt, die von einem Mikrofon 8 aufgenommen werden, wobei das Mikrofon 8 elektrische Audiosignale S3 zur Einbindung in das erste Videosignal S1 an die Videokamera 2 ausgibt. Hierbei kann das Mikrofon 8 in die Videokamera 2 integriert sein.

Der Programmserver 7 ist an ein Computernetzwerk bzw. Internet 9 angeschlossen. An das Internet 9 sind weiterhin ein Webserver 10 und weitere Computer (Rechner) 12 angeschlossen, wobei die Computer 12 über das Internet 9 auf den Webserver 10 zugreifen. Hierzu ist auf den Computern 12 jeweils ein Browser-Programm 14 installiert, das bei einer entsprechenden Aktivierung über das Internet 9 die Internetadresse des zweiten Servers 10 aufruft, wodurch ein auf dem zweiten Server 10 installiertes Server-Programm 15 gestartet wird.

Wenn ein an das Internet 9 angeschlossener Computer 12 über seinen Browser 14 bei Eingabe der entsprechenden Internetadresse bzw. Computernetzwerkadresse auf den zweiten Server 10 zugreift, überträgt der zweite Server 10 eine Internetseite als Signal S4 über das Internet 9 an den Computer 12, d.h. die Internetseite bzw. Webseite wird als Signal S4 über das Internet 9 zu dem Rechner 12 übertragen.

Erfindungsgemäß wird bei Abruf der Internetseite S4 ein Programm 17 gestartet, das in einer zweiten Speichereinrichtung 22 auf dem Programm-server 7 abgelegt ist. Die beiden Speichereinrichtungen 11, 22 können als gemeinsamer Speicher ausgebildet sein. Hierbei wird die Videodatei S2 über das Internet 9 oder auch über eine andere Datenverbindung zu dem zweiten Server 10 übermittelt, wobei das Programm 17 eine Einbindung der Videodatei S2 ermöglicht, wie mit Bezug zu Fig. 2 nachfolgend erläutert wird.

Auf dem an den Computer 12 angeschlossenen Monitor 18 wird in an sich bekannter Weise die Webseite (Internetseite) S4 angezeigt. Das Programm 17 bindet herbei das Videosignal S2 in die Internetseite S4 ein. Die Einbindung kann z.B. über das Programm Adobe Flash auf der Internetseite S4 erfolgen. Gemäß Fig. 2 wird die Internetseite S4 als Fenster bzw. in einem Fenster w1 auf dem Monitor 18 wiedergeben, wobei auch z.B. mehrere Internetseiten in mehreren Fenstern w1, w2 angezeigt werden können. Das Programm 17 führt nunmehr eine Bildkomposition bzw. Überlagerung des Videosignals S2 auf der Internetseite S4 durch, wobei aufgrund der Transparenz der weiteren Pixelpunkte Pij lediglich das Objekt 5 zusätzlich auf der Darstellung der Internetseite S4 erscheint. Hierbei kann das Videosignal S2 in einem Teilbereich des Fensters s1 oder auch in einem weiteren, eingeblendeten Fenster w3 angezeigt werden.

Das Programm 17 kann vorteilhafterweise eine Verschiebung des eingeblendeten Fensters w3 auf der Internetseite S4 durchführen, in Fig. 2 gemäß dem Pfeil nach unten; dies stellt eine weitere Bewegung zusätzlich zu der Bewegung des Objektes 5 - hier nach rechts gezeigt - dar. Weiterhin können zusätzliche Aktionen auf der Internetseite S4 durchgeführt werden, insbesondere können Links 20 oder andere aktivierbare Flächen 21 auf der Internetseite w1 aktiviert werden.

Hierbei kann das Objekt 5, d.h. insbesondere die menschliche Person 5, Aktionen durch Anklicken und Aktivieren der Links 20 oder anderen aktivierbare Flächen 21 ausführen, die sie entsprechend sprachlich kommentiert.

Erfindungsgemäß ist es weiterhin auch möglich, dass das Programm 17 zwischen verschiedenen Internetseiten und somit verschiedenen Fenstern w1, w2 bei der Darstellung in dem Monitor 18 wechselt, d.h. vom Fenster w1 auf das Fenster w2 springt. Hierbei können auch weitere Fenster durch das Programm 17 geöffnet werden, so dass das Objekt 5 nachfolgend auf dem neu geöffneten Fenster dargestellt wird.

Somit kann das Programm 17 sich auf der dargestellten Internetseite w1, w2 frei bewegen. Das Programm 17 kann zwischen den mehreren Internetseiten und somit den dargestellten Fenstern Ww1, w2 springen und sich vorherige Internetseiten merken, so dass es auch komplexe Navigationen durchführen kann.

Das Programm 17 kann hierbei auch Interaktionen mit der Webseite S4 durchführen, die mittels der entsprechenden Programmiersprache, z.B. Javascript, bzw. einer anderen Script-Sprache oder Programmiersprache, möglich ist.

Bei dem erfindungsgemäßen Verfahren werden somit nach dem Start in Schritt St0 vorab in einem Schritt St1 ein oder mehrere Videodateien als Videosignale S2 erzeugt und in dem Programmserver 7 abgespeichert. Bei einer nachfolgenden Anfrage durch einen Computer 12 über das Internet 9 ruft in Schritt S1 der Browser 14 des Computers 12 die Internetseite S4 von dem zweiten Server 10 ab. Der zweite Server 10 aktiviert in Schritt S3 das Programm 17 im Programmserver 7. Nachfolgend bindet in Schritt S4 das Programm 17 das Videosignal S2 als Überlagerung auf der Internetseite (Webseite S4) ab, wobei diese Daten in Schritt S5 über das Internet 9 wiederum zu dem Rechner 12 übertragen und dort auf dem Monitor 18 dargestellt werden.

## Patentansprüche

1. Verfahren zum Erstellen und Ausgeben von Webseiten (S4) über ein Computernetzwerk (9), insbesondere ein Internet (9), mit mindestens folgenden Schritten:
Erfassen eines sich bewegendes Objekts (5) mit einer Videokamera (2) vor einem Hintergrundschirm (4) und Ausgabe eines ersten Videosignals (S1), das in zeitlich aufeinander folgenden Frames (Fn)jeweils mehrere Bildpunkte (Pij) aufweist,
Verändern von Transparenzwerten (α) derjenigen Bildpunkte (Pij) der Frames (Fn), die dem Hintergrundschirm (4) zugeordnet sind, und Ausgabe als zweites Videosignal (S2),
Speichern des zweiten Videosignals (S2) als Videodatei (S2) in einer ersten Speichereinrichtung (11), und
Anbieten mindestens einer Webseite (S4) zum Abruf von einem Webserver (10) in dem Computernetzwerk (9),
wobei bei Abruf der Webseite (S4) von dem Webserver (10) durch einen Computer (12) über das Computernetzwerk (9) die gespeicherte Videodatei (S2) als Videosignal der abgerufenen Webseite (S4) überlagert wird.

2. Verfahren nach Anspruch 1, **dadurch gekennzeichnet, dass** in einer zweiten Speichereinrichtung (22) ein Programm (17) gespeichert ist, das von dem Webserver (10) bei Abruf der Webseite (S4) aktiviert wird, wobei das Programm (17) nachfolgend die Videodatei (S2) der abgerufenen Webseite (S4) überlagert.

3. Verfahren nach Anspruch 2, **dadurch gekennzeichnet, dass** das aufgerufene Programm (17) auf der Webseite (S4) Befehle durchführt und/oder Aktionen startet.

4. Verfahren nach Anspruch 2 oder 3, **dadurch gekennzeichnet, dass** das aufgerufene Programm (17) interaktiv mit der abgerufenen Webseite (S4) agiert.

5. Verfahren nach einem der Ansprüche 2 bis 4, **dadurch gekennzeichnet, dass** das aufgerufene Programm (17) weitere Webseiten des angerufenen Webservers (10) öffnet und zu dem anfragenden Computer (12) überträgt.

6. Verfahren nach einem der Ansprüche 2 bis 5, **dadurch gekennzeichnet, dass** das aufgerufene Programm (17) auf mehreren Webseiten (S4) agiert und die auf der Anzeigeinrichtung (8) dargestellte Videodatei (S2) aufeinander folgend in unterschiedlichen Fenstern (W1, W2) darstellt.

7. Verfahren nach einem der Ansprüche 2 bis 6, **dadurch gekennzeichnet, dass** die erste Speichereinrichtung (11) und/oder die zweite Speichereinrichtung (22) in einem Programmserver (7) abgelegt ist, der von dem Webserver (10) über das Computernetzwerk (9) angerufen wird.

8. Verfahren nach einem der Ansprüche 2 bis 6, **dadurch gekennzeichnet, dass** die erste Speichereinrichtung (11) und/oder die zweite Speichereinrichtung (22) in dem Webserver (10) integriert ist.

9. Verfahren nach einem der vorherigen Ansprüche, **dadurch gekennzeichnet, dass** bei Darstellung der abgerufenen Webseite (S4) in einer Benutzeroberfläche (w1) auf einer Anzeigeeinrichtung (18) das Videosignal (S2) in einem Teilbereich (w3) der Benutzeroberfläche (w1) dargestellt wird, wobei die Position des Teilbereichs (w3) in der Benutzeroberfläche (w1) zeitlich verändert wird.

10. Verfahren nach Anspruch 9, **dadurch gekennzeichnet, dass** die Benutzeroberfläche (w1) ein Fenster (w1) ist und die Videodatei (S2) als veränderbarer Teilbereich des Fensters oder als dem Fenster (w1) überlagertes Teilfenster (w3) dargestellt wird.

11. Verfahren nach einem der vorherigen Ansprüche, **dadurch gekennzeichnet, dass** der Hintergrundschirm (4) einen einheitlichen Farbwert, z.B. einen grünen oder blauen Farbwert, aufweist und die Pixelwerte (Pij) der Frames (Fn) des ersten Videosignals (S1), die diesen Farbwert aufweisen, nachfolgend eine vollständige Transparenz (α=0) zugeordnet wird.

12. Verfahren nach einem der vorherigen Ansprüche, **dadurch gekennzeichnet, dass** das von der Videokamera (2) aufgenommene Objekt (5) eine menschliche Person (5) ist.

13. Webseite, die durch ein Verfahren nach einem der vorherigen Ansprüche hergestellt ist.

14. Anordnung (1) zur Durchführung eines Verfahrens nach einem der Ansprüche 1 bis 12.
